# EUROPEAN PATENT APPLICATION

(11) **EP 2 469 454 A1**
(43) Date of publication of application: **27.06.2012**
(21) Application number: 11009150.1
(22) Date of filing: 18.11.2011
(51) Int. Cl.: G06Q 10/00

(54) **Lightweight ontology based realization of a business to business protocol and a service oriented architecture integration engine**

(30) Priority: 22.12.2010 US 975588
(71) Applicant: SAP AG, 69190 Walldorf (DE)
(72) Inventor: Meijler, Theo Dirk, 69190 Walldorf (DE); Nietzold, Frank, 69190 Walldorf (DE)
(74) Representative: Müller-Boré & Partner Patentanwälte

(57) **Abstract**

Disclosed is a method of business-to-business messaging by receiving a human-cognizable business-to-business message; parsing the human-cognizable businessto-business message; validating the human-cognizable business-to-business message using a message protocol ontology; and selecting and executing a service call corresponding to the particular human-cognizable business-to-business message based upon a message-to-service ontology.

## Description

### BACKGROUND

"Business to Business" (B2B) describes commerce transactions between businesses, such as between a manufacturer and a wholesaler and retailer.

"Service oriented architecture" (SOA) refers to an architecture for building and providing a business solution, which divides the business solution into units of services. These service based architectures typically allow for high-reliability at reduced cost due to extensive re-use and modification of existing services. A service oriented architecture provides a method by which modem B2B commerce can be implemented in a flexible and economical manner.

A B2B messaging protocol is a formal description of the B2B message formats and the rules for exchanging those messages between the various collaborating B2B parties. Typically, in B2B message based communications, complex and proprietary messaging protocols must be developed that support the B2B message based communications. Setting up B2B message based communication is often a lengthy process requiring agreement on the B2B messaging protocol and the implementation of specifically tailored software to implement the protocol.

Standardization efforts aim to standardize the messaging protocols and therefore, make implementation of the software to handle the B2B messaging easier. Standards however are more rigid and specialization of the developed standard to individual needs of the collaborating partners is generally not possible.

### SUMMARY

Disclosed, in one example, is a method of business-to-business messaging using a computer processor programmed to perform the operations including receiving a human-cognizable business-to-business message; parsing the human-cognizable business-to-business message; validating the human-cognizable business-to-business message using a message protocol ontology; and selecting and executing a service call corresponding to the particular human-cognizable business-to-business message based upon a message-to-service ontology.

Disclosed, in another example, is a business-to-business messaging system with a user terminal configured to send a human-cognizable business-to-business message through a communications network to a central terminal based upon a message protocol ontology; the central terminal comprising a computer processor which is configured to validate the human-cognizable business-to-business message based upon the message protocol ontology and using a message-to-service ontology, execute a service call corresponding to the human-cognizable business-to-business message.

Also disclosed in yet another example, is a machine readable medium that stores instructions which when performed by a machine, causes the machine to perform the operations of: receiving a human-cognizable business-to-business message; obtaining a current state of a domain object stored in non-transitory storage, wherein the business domain object is identified in the human-cognizable business-to-business message; validating the received human-cognizable businessto-business message based upon a new desired state provided in the human-cognizable business-to-business message, a current state, and a message protocol ontology; updating the current state of the domain object to the new desired state if the human-cognizable business-to-business message is successfully validated by executing a service call which is selected based upon a message- to-service call ontology.

### BRIEF DESCRIPTION OF THE DRAWINGS

**FIG. 1** illustrates an example situation in which B2B messaging protocols can be used.

**FIG. 2** shows example message sequences between a coordinator and responder according to one example.

**FIG. 3** shows a general B2B framework according to one example.

**FIG. 4** shows a high level flow chart of one example of a B2B message protocol.

**FIG. 5** shows an example message-to-service protocol ontology according to one example.

**FIG. 6** shows an example message protocol ontology according to one example.

**FIG. 7** shows example state transitions according to one example.

**FIG. 8** shows an example system that can implement the B2B message protocol and service oriented architecture integration engine.

**FIG. 9** shows an example sequence chart detailing calls between the components of Figure 8.

**FIG. 10** shows an example computing architecture.

### DETAILED DESCRIPTION

In the following, a detailed description of examples will be given with references to the drawings. It should be understood that various modifications to the examples may be made. In particular, elements of one example may be combined and used in other examples to form new examples.

The present disclosure describes in one example, an extensible method, system and product for realizing a B2B message based protocol for communication about business objects and an SOA integration engine for calling services in response to receipt of a B2B message. In one example, the B2B messaging protocol is built using lightweight protocol ontology models that facilitate easy changes to the messaging protocol by non-technical individuals and without modifications to the underlying system itself. In other examples, a SOA integration engine can also be implemented in a similarly flexible manner to bind particular messages to a service call of a SOA based upon message-to-service ontologies. In yet additional examples, the B2B messages can be human cognizable and use structures that are based upon principles of the Language Action Perspective.

While B2B messages sent between various communicating entities can be used to achieve many purposes, in one example, the subject of a B2B message can concern the status or some property of a real world object or process. The real world objects, resources or tasks that are the subject of the communications can be represented digitally by the parties through the use of data structures. These data structures are referred to herein as "domain objects." These domain objects can store any desired properties about the attributes of the real world objects. In one example of the present disclosure, these properties can then be updated by the parties through the B2B messaging protocol described herein. Thus, in one example, through the use of the B2B messaging, the domain objects can be updated to reflect the true, real world status of the real objects they represent.

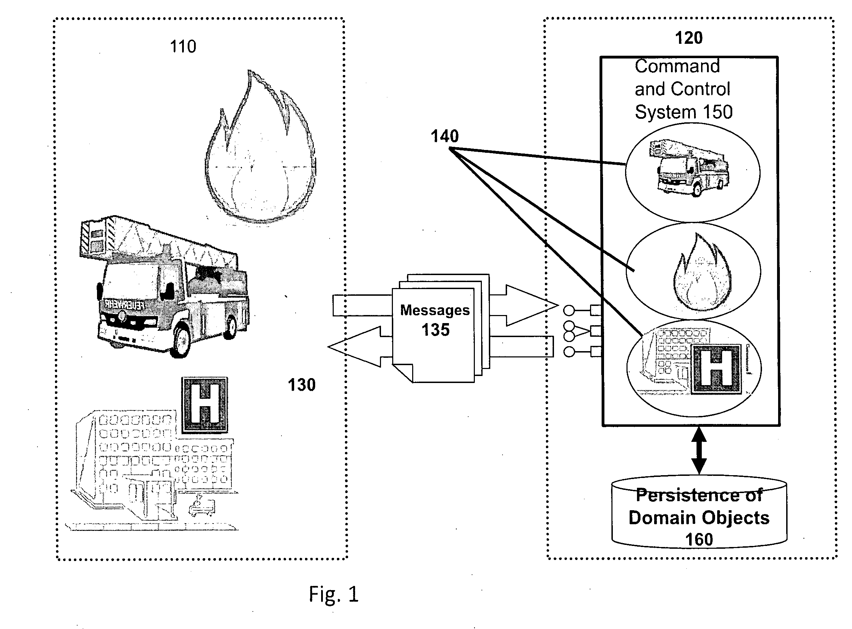

While B2B messages get their name from business to business transactions, the applicability of B2B messaging and SOAs are not limited to business situations. Indeed, one alternative example situation is illustrated in Fig. 1 where one example application of the B2B messaging protocol is shown. Here, emergency responder 110 communicates with a dispatcher or emergency coordinator 120 about the status of real world resources and situations 130. These real world objects 130, include the actual emergency itself (a fire), and various resources, such as a fire truck, and a hospital. Updates on the status of the fire, the fire truck and the hospital are relayed by the emergency responder 110 using messages 135 utilizing the B2B messaging protocol. This allows the dispatcher or emergency coordinator 120 to update domain objects 140, stored in command and control system 150, so that system 150 and ultimately emergency coordinator 120 have a more complete view of both the emergency situation, and all resources and manpower available in order to better plan the response. In one example, domain objects 140, may be stored in electronic storage, such as a database 160.

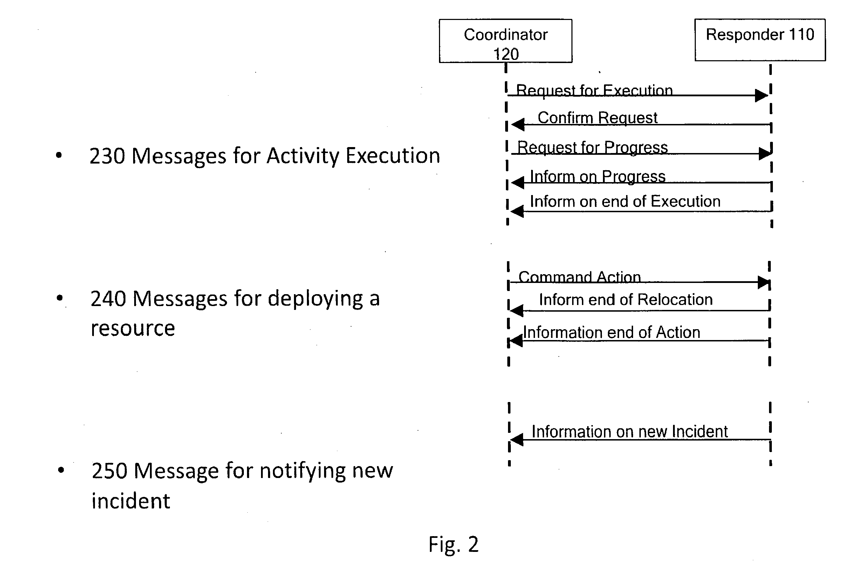

Fig. 2 shows example message flows, between the emergency coordinator, or dispatcher 120 and the emergency responder 110. Example message flows include but are not limited to, messages directing execution of an activity 230, deploying a resource 240, and messages for notifications regarding new information, or new incidents 250.

While Figs. 1-2 show a particular example of an emergency response situation, the present disclosure is applicable across a wide range of applications. Other applications can include communications between businesses or business entities, logistics, virtual manufacturing, virtual planning, virtual administration, and any other task which calls for messaging between two communicating parties.

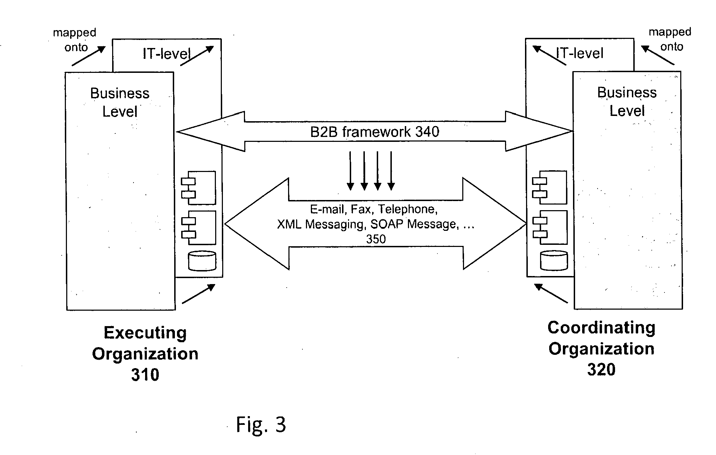

Fig. 3 shows an application independent, high level view of a B2B messaging framework 340, according to one example. The executing organization 310, is any entity that observes, updates, or acts upon the real world objects represented by stored domain objects (e.g., domain objects 140). In Figs. 1 and 2, the executing organization 310 was the emergency responder 110. The executing organization communicates the status of the various real world objects using the B2B messaging framework 340 to the coordinating organization 320. In Figs. 1 and 2, the coordinating organization 320 was the emergency dispatcher, or coordinator 120. The B2B messages can be sent using a variety of lower level protocols and methods using a variety of communication networks 350. The lower level protocols and methods can be any method or protocol used to pass a message between the executing organization 310 and the coordinating organization 320. Examples of protocols and methods 350 used to deliver messages 135 (Fig. 1) can include (but are not limited to): telephone, telegraph, digital or analog cellular communications, or any combination of digital and analog cellular communications, including analog, digital, 2^{nd} Generation (2G) systems such as Integrated Digital Enhanced Network (ʺiDENʺ) systems, Global System for Mobile Communications ("GSM"), 2.5G systems such as General Packet Radio Service ("GPRS"), 2.75G systems such as Enhanced Data Rates for GSM Evolution ("EDGE"), 3G systems such as Universal Mobile Telecommunications System ("UMTS"), and 4G Systems such as the Worldwide Interoperability for Microwave Access (ʺWiMAXʺ), and Long Term Evolution ("LTE") systems, and the like, other wireless protocols such as 802.11, Bluetooth, email, fax, xml messaging, Simple Object Access Protocol ("SOAP") messaging, micro blogging through for example, TWITTERTM operated by Twitter, Inc. of San Francisco CA., text messaging (or "SMS"), instant messaging, satellite communications and the like. Any number of lower-level messaging protocols may be used, such as Transmission Control Protocol ("TCP"), Internet Protocol ("IP"), User Datagram Protocol ("UDP"), Asynchronous Transfer Mode ("ATM"), Hypertext transfer protocol ("HTTP"), Secure HTTP ("HTTPS"), and the like.

The coordinating organization 320, stores an electronic representation of the real world object as a domain object and updates the status of the domain objects based upon messages received from the executing organization 310.

The coordinating organization 320 can issue commands to the executing organization 310 to take action on the real world objects. Once the action has been executed, the executing organization 310 can send a B2B message back to the coordinating organization 320 that the action has been executed. The coordinating organization 320 then updates the status of the domain object to reflect the completed activity.

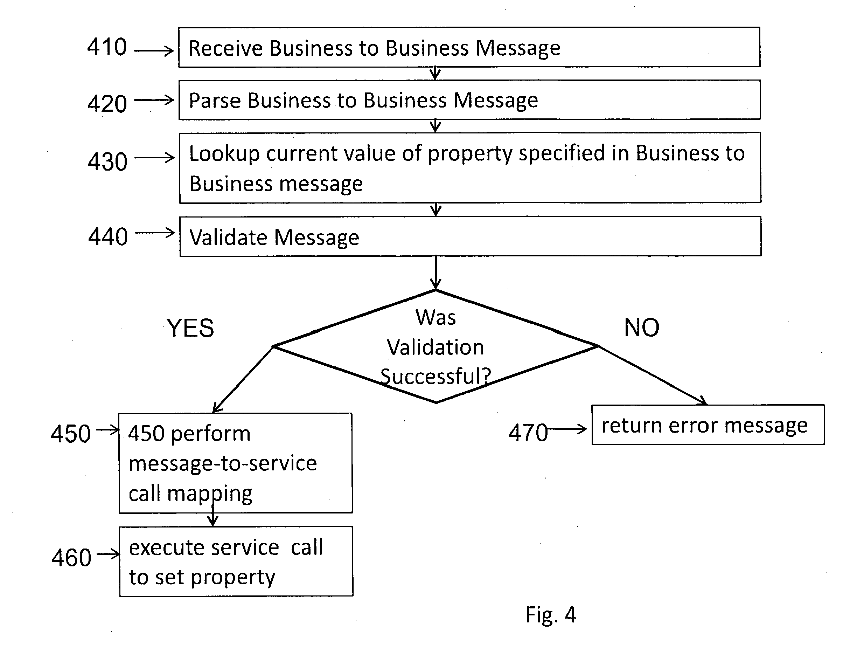

One example of a method utilized by a coordinating organization system 320 to process the various B2B messages of the present techniques is shown in Fig. 4. In block 410, the system first receives a B2B message.

In block 420, the various parts of the message can be parsed. In one example, all, or part of, the B2B message can be both computer readable and human cognizable. Having the messages human cognizable allows for human creation of the B2B messages in some implementations. Human cognizable messages also allows for human understanding of the B2B messages quickly and easily, which may be of benefit in some implementations where humans will ultimately be responsible for executing at least some of the commands sent from the coordinating organization 320. One example of such an implementation where human cognizable messages would be helpful would be the emergency responder situation as shown in Fig. 1. In other examples, the message can be non-human cognizable. It will be understood by those skilled in the art that in the human cognizable examples, the human cognizable B2B messages can be encoded, decoded, and/or stored in either digital or analog formats in order to facilitate the storage, transmission and manipulation of these messages through the use of computers or other analog or digital transmission, storage or control equipment. In one example the human cognizable message can include a message type, an object type, an object reference, a property, an old value, a new value, a time slot, and a reason.

In one example, the message types passed between the coordinating organization and the executing organization can identify the type of action taken or requested. The message types can be based upon principals of the Language Action Perspective (LAP). The LAP states that language consists of speech acts as basic units of an utterance. With each utterance the speaker performs an action (speech act). For example, with the expression "I beg your pardon," the speaker requests his conversational partner to repeat the last sentence. Each speech act consists of two components: the propositional content and the illocutionary force. The propositional content describes the actual content of an utterance, i.e. what the utterance is about. The illocutionary force describes the way it is uttered or the speaker's intention. B2B message types can be constructed based upon the illocutionary force concept of the LAP. This allows the message to express, in a human cognizable way, the intention behind the message concerning a domain object's state change. By selecting a specific portion of human language that is natural to human speakers, and yet compact enough to program into a computer, both human and computer cognition can be achieved.

Some example message types based on LAP can include:
- Requesting a state change: asking for a state change with the receiver having the option to confirm or deny the request.
- Order a state change: corresponds to a command that must be executed by the receiver, there is no choice.
- Confirm state change: expresses the intention to perform an action.
This message can also follow in response to an order.
- Inform about a state change: informs the receiver about a new state of a domain object.
- Deny a state change: expresses the intention not to perform a requested action.
- Inform about a new object: informs the receiver about a new object in the external world.
- Request information: asks for information about a domain object.
Deliver information: delivers requested information about a domain object.
While the above message types are provided as examples, one skilled in the art will recognize that other message types are possible, both based upon principles of LAP or otherwise.

In some examples, the message can also contain an object type field that specifies the type of real world object that is the subject of the B2B message. One example object type would be an "activity." This specifies that the real world object referenced is categorized as an activity. Other example object types can be "resource," "incident," or any other category of real world object that is desired.

In some examples, the message can also contain an object reference field that specifies the actual real world object. For example, if the object type field is "activity," the reference may be any specific type of activity, such as: "put out fire," or "ship packages." If the object type is "resource," the object reference could be, for example, "package," or "fire truck." The object reference field specifies the exact object that is the subject of the message. In the case where multiple resources are in the system (say two fire trucks), the fire trucks can be differentiated through an additional field in the message, or given a unique object reference field. Thus for example, "fire truck," would be "fire truck 1,ʺ and "fire truck 2," in the case of two fire trucks.

In still other examples, the message can also contain a property field that signifies the information field in the domain object that the user wishes to update. One example might be "status," which is indicating that the user wishes to update the status of the domain object to some value. Another example might be "fuel level" to update the status of how much fuel a resource has. This field can be any property that the user wishes to track. Other examples might include the status of an article of manufacture, such as "assembly stage," to denote where the item is in the manufacturing process.

In some examples, the message includes an old value field that signifies the old value (i.e., a previous value) of the domain object property specified in the property field. In the above example where the property signifies "status", the old value may indicate "ready," "not-ready," "suspended", or the like.

In some examples, the message can include a new value field that is the desired new value for the domain object property specified in the property field. One example new value where the property is "status" would be "failed," or "busy." Other examples could include specific property levels. For example, if the property field is "fuel level," the new value could be a reading of the amount of fuel currently available, such as "501bs," or "1/2 full." If the property field is "assembly stage," a new value field could be "painted," to indicate that the item was recently painted.

It will be recognized by those skilled in the art that the property of the domain object can be any type of property desired. Thus the actual values of the property can be Boolean, string, integer, floating point, or any other data type.

In some examples, the message can also contain a time slot field which indicates the time at which to process the state change. One example time slot would be "immediate." Other time slot values could be specific times, say "7:00 p.m. CST" or in offsets, for example "30 minutes from now." In other embodiments the time can include a reference date, such as "5/5/2011 7:00 p.m. CST."

In yet other examples, the message can also contain a reason field that can be a free text section for notes and other miscellaneous communications.

Putting this all together, one example message could be: "request state change, activity, put out fire, not started, started, immediately, prevent destruction of house." This message conveys, in a human cognizable way, the request to an emergency responder to begin firefighting efforts to prevent destruction of a house. Because the message is structured with a limited vocabulary of language, this message is computer cognizable, and since the limited vocabulary is specifically structured to be natural to humans, it is also human cognizable.

Continuing with Fig. 4, in one example, after the message is received, and parsed, the proper service calls to execute are determined in block 430. The process of determining and executing a service call makes up part of the SOA integration engine. In some examples, the proper service call of a service oriented application is determined by using a message-to-service ontology which models the connections between each operation of each service to the domain object type, the type of the domain object property and the message types which trigger the service operation.

By use of the message-to-service ontologies, the message-to-service call mappings can be made flexible enough to easily update, adapt, and create new B2B messages, protocols, and services with little to no modification to the underlying code. All that is necessary is to update the message-to-service ontology.

The message-to-service ontologies, which define the various service callers to execute given the various properties of the domain objects and the received message, is defined in one example, using domain ontologies. Domain ontologies define a vocabulary of concepts from a part of the world (a domain) and specify relationships between those concepts. Common components of domain ontologies are concepts that describe information about classes of things, and specific instances of concepts and the relationships between different concepts and different instances.

For example, the concept WINES might have general descriptive information for the alcoholic beverage such as: that it is made from grapes, it contains alcohol, and the like. A specific instance of WINES might be a cabernet sauvignon. The cabernet sauvignon might include specific properties to that particular instance of WINE concept, such as that the cabernet sauvignon is made from red grapes. Thus through the use of ontologies, a discrete part of the world can be modeled and represented. These domain ontologies can be modeled and stored in a database or other data storage using a specific machine-readable syntax. Common Ontology languages can include, in some examples, languages of the Web Ontology Language (OWL) knowledge representation languages and F-LOGIC TM. Logical reasoning software such as PELLETTM, RACERPROTM, FACT++TM, ONTOBROKERTM from Ontoprise GmbH, Germany, and HERMITTM can then be used to analyze the modeled ontology and make inferences based upon those ontologies.

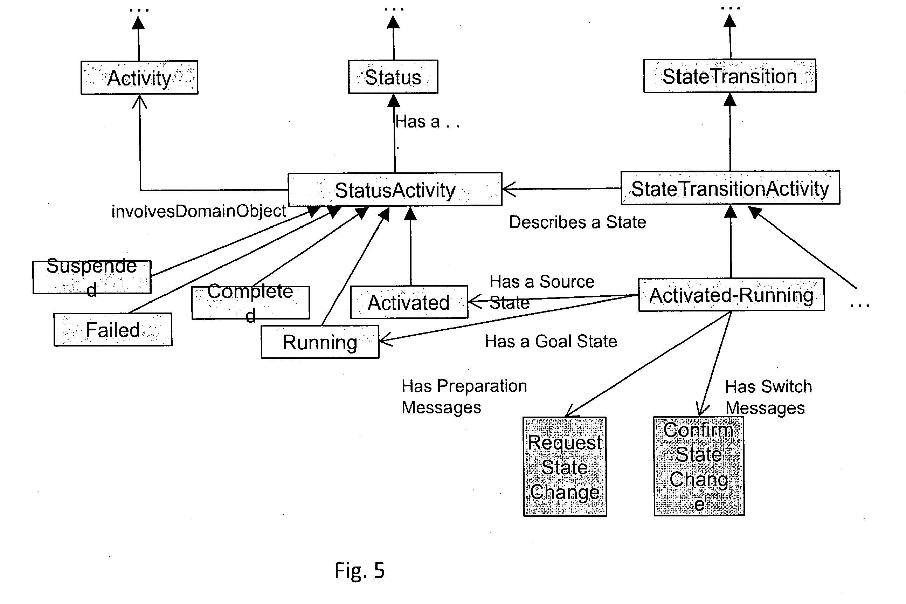

Referring now to Fig. 5, a portion of a message-to-service ontology is shown. Each service can be modeled as a sub concept of a "Service," and each service operation can be a sub-concept of one of "Get," "Update," or "Create," denoting operations for reading a domain object property, updating it, or creating a domain object. In the example shown in Fig. 5, the "UpdateActivityStatusAction" represents an action to update the status of an activity. This is shown by the association of the ʺUpdateActivityStatusAction,ʺ with the "Update" action and the "Status" property and "Activity" concepts. In the example shown, the "UpdateActivityStatusAction" can be triggered only by "Request State Change," "Confirm State Change," and "Inform About State Change,ʺ messages. This is shown by the association of those message types with the ʺUpdateActivityStatusAction,ʺ action concept in the message-to-service ontology model. Additionally, the ʺUpdateActivityStatusAction,ʺ is associated with another action, the ʺGetActivityStatusAction,ʺ which represents an action to get the current status of the activity. This association represents the ability of the ʺUpdateActivityStatusAction,ʺ to get the current state for use in the validation of the messaging protocol in block 440.

In some examples, the message type, object type, and property as specified in the received B2B message can be used to determine the proper position in the message-to-service ontology, and thus the proper service call. In some examples, the system searches through the message-to-service ontologies for a service call that involves those object and property types and is triggered by that message type. If a service call is found, the service can be invoked. In one example, Java reflection techniques are used to invoke a service operation that has the same name as the associated service action found in the message-to-service ontology. In the Example of Fig. 5, this service action name would be ʺUpdateActivityStatusAction.ʺ

One way service calls can be executed is by using the reflection techniques in the Java programming language. These reflection techniques support dynamic retrieval of information about classes, data structures, and methods by name, and allow for their manipulation within an executing Java program. Other example mechanisms to call the actual services include RPC (remote procedure call), shared library calls such as .DLL calls, inter-process communications, messaging (including inter and intra system messaging), or the like.

The result is that the message-to-service ontology used to call services is flexible enough to handle many different types of domains and services. All that is needed to add a new type of domain object or new service is to create or update a simple-to-construct message-to-service ontology model, or re-use another, existing model with either no modifications, or slight modifications.

While the format of the message-to-service ontology shown in Fig. 5 is one example message-to-service ontology that can be built to define a message-to-service call mapping, one skilled in the art having the benefit of the disclosure will appreciate that other formats can be used without departing from the scope of the present disclosure.

Continuing with Fig. 4, once the service calls are determined in block 430, the current value of the property that is the subject of the B2B message, as defined in the property field of the message, is extracted at block 440. The extraction of the current value of the domain object property, in one example, is done by executing the service calls determined from the message-to-service call ontology in block 430.

Once the current property value is extracted in block 440, the message handler in one example, validates the messaging protocol in block 450 to ensure that the particular property can be set based upon the established message protocol, the current value, and the intended values from the received message. The messaging protocol, which defines the various message sequences allowed given the various properties of the domain objects, is defined in one example, using domain ontologies. By using a protocol ontology, this validation is agnostic about the particular domain object or its properties. By use of the ontologies, the messaging protocol can be made flexible enough to easily update, adapt, and create new B2B messages and protocols with little to no modification to the underlying code. All that is necessary is to update the messaging ontology.

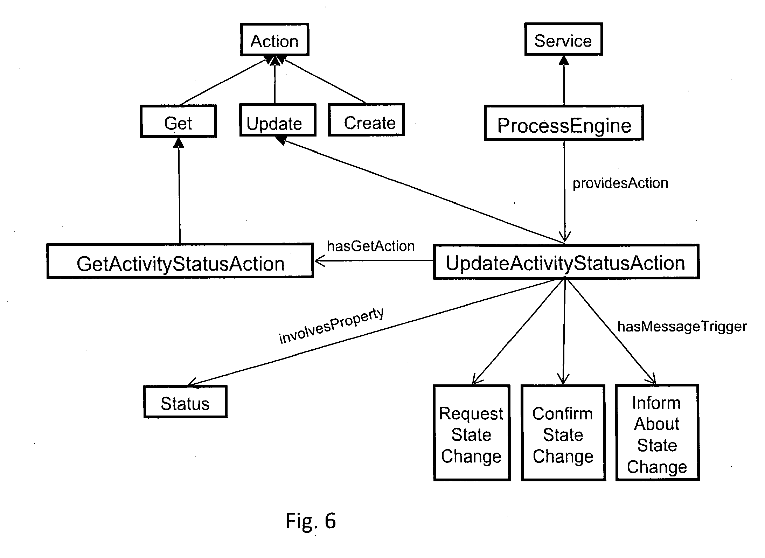

In one example, a message protocol ontology is referenced to determine whether the message is correct given the current properties of the domain object. In Fig. 6 one example of a portion of a message protocol ontology is shown. In Fig. 6, a domain object type of "Activity" is shown which represents a generic concept for some real world activity such as "fighting a fire," or "building a sand bag wall." In the example model, each activity in the system, whether it be "fighting a fire," or "building a sand bag wall," has a status (or other) property. In the model, the specific ʺStatusActivityʺ concept is therefore related to the generic ʺActivityʺ and "Status" concepts. The status in the present example can be one of "suspended," "failed," "completed," "running," or "activated." The "StateTransitionActivity" concept is related to the "StatusActivity" concept in that it defines allowed state transitions between the various source states and the various target states. Each allowable source and target state transition will be modeled as a specific "StateTransitionActivity" concept. In Fig. 6, this is the ʺActivated-Runningʺ concept. This concept signifies an allowed state transition from the Activated to the Running state. Some state transitions will not be legal state transitions (i.e. from "Completed," to "Running" for example) and they will not be modeled. If the message handler gets a message attempting to change the status of a domain object that is not allowed (such as, for example, a message requesting that a "Completed" domain object have its state changed to ʺRunningʺ), the system will send back a failure as it will not be contain a "StateTransitionActivity" object for that state transition. Other state transitions can be modeled (but are not shown in Fig. 6 to avoid obscuring the inventive subject matter). Each specific "StateTransitionActivity" can have information specifying the various messages used to transition the state from the source state, to the goal state. In Fig. 6, the "Activated-Running" state transition accepts both a preparation message and a switch message. While the format of the protocol ontology shown in Fig. 6 is one example protocol ontology that can be built to define a B2B messaging protocol, one skilled in the art having the benefit of the disclosure will appreciate that other formats can be used without departing from the scope of the present disclosure.

In one example, shown in Fig. 6, to change a state, both a preparation message and a switch message are used. In other examples, one or the other may be used. Specifically, in some examples, a preparation message may not be used. Preparation messages prepare both the executing organization 310 and the coordinating organization 320 for the state change and more specifically, in one example, instructs the executing organization 310 to perform the state change ― whether it is to start firefighting operations, or the like. A switch message, by contrast, is a confirmation message that the state change has occurred. In one example, the coordinating organization 320 can send a preparation message to the executing organization 310 to start the activity "build sand wall." Once the executing organization 310 receives the message and starts the activity, the executing organization 310 can send a switch message to the coordinating organization 320. The coordinating organization 320 then updates the domain object for "build sandbag wall," to reflect the state "started."

When the various B2B messages are validated using the protocol ontologies, the system can search for the correct protocol ontology by using the domain object and property type that can be included in the B2B message. Once the correct protocol ontology is located, the system can use the current state of the domain object (gathered by the prior service call), and the new, desired state, to determine the position in the protocol ontology. For example, if the StatusActivity in Fig. 6 is "Activated," and a message comes in requesting to change the state to "Running," the system can locate the "Activated-Running" "StateTransitionActivity" concept. Because the concept exists, this is a valid state transition message given the current state. The system can use, in one example, the lastly handled message, which is stored in the system, to verify that a preparation message was sent or received prior to a switch message, if necessary based on the protocol ontology. Additionally, the lastly handled message can verify that the object was not previously preparing to switch to a different goal state.

In this way, the protocol ontology can define the allowed state transitions for the various domain objects, and can also define the allowed message protocol for the various B2B messages in an easily extensible manner. While the example of Fig. 6 shows the transitions of a "Status" property, other properties can be modeled.

The result is that the message protocol to update various properties of the domains is flexible enough to handle many different types of domains. All that is needed to add a new type of domain object is to create or update a simpleto-construct ontology model, or re-use another, existing model with either no modifications, or slight modifications. The protocol ontology and thus the message protocol can be re-used across different activities in some examples. Thus the protocol ontology and thus the message protocol for "fighting a fire," and "building a sand-bag wall" can be the same.

For example, the domain ontology exemplified in Fig. 6 can be used to model the messaging protocols in relation to many different activities. Therefore, the protocol ontology model, and thus the messaging protocols, for "building a sand wall," and "fighting a fire," can be the same. Additionally, slight modifications can be made between the models to modify the protocol for the individual needs of the particular activity.

Continuing with Fig. 4, if the message is inconsistent with the protocol (either an invalid message, or the state transition is not appropriate given the current state), a message can be returned at block 470 indicating a failure to update the desired property of the domain object.

If the message is consistent with the protocol, the system executes the service call to change the desired property as specified in the B2B message in block 460. The service call to execute, in one example, was determined in block 430. As with block 440, one way service calls can be executed is by using the reflection techniques in the Java programming language. Other example mechanisms to call the actual services include RPC (remote procedure call), shared library calls such as .DLL calls, inter-process communications, messaging (including inter and intra system messaging), or the like.

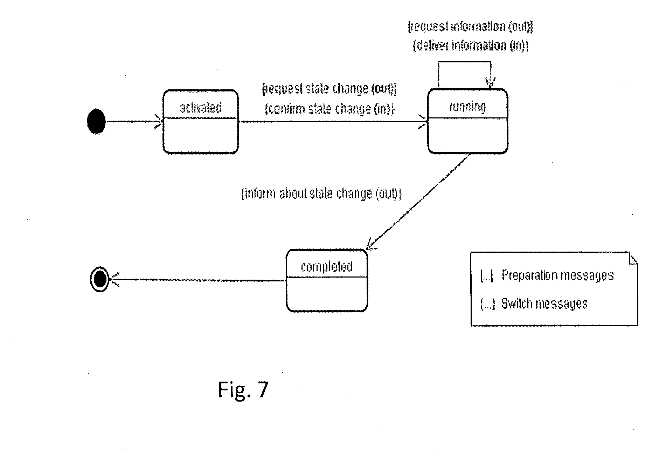

Figure 7 shows an example state transition diagram of an activity. In this example, when the state of the domain object is "activated" and a "request state change" message is sent from the coordinator to the responder to request a status change to "running," the real world activity is started and a confirmation message is sent to the coordinator, who then updates the state of the domain object to "running." When the domain object is in a "running" state, a request for information will be responded to, but will not change the state of the domain object. When the domain object is in the "running" state, the only message that will change the state of the domain object is an "inform about state change," message which will change the status to "completed." Figure 7 is shown as one example state transition diagram for a messaging protocol and SOA integration engine, however, one skilled in the art will recognize that other state transition diagrams can be used.

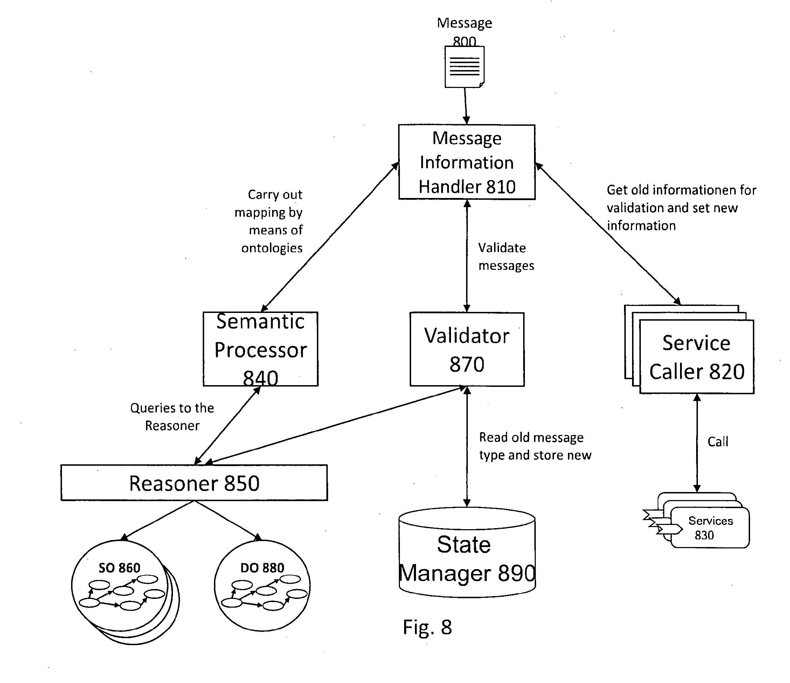

Fig. 8 shows one example of a system to implement the B2B messaging protocol. Message information handler 810 is a component that is responsible for accepting a message 800 and calling other components.

Service caller 820 encapsulates code that is required to execute a call to a service 830. In one example, there is a specific service caller 820 for each service 830. This can serve to decouple the message information handler 810 from the specifics of each service 830, thereby promoting flexibility. Service callers 820 in one example provide a standardized interface for invoking service operations. In one example, the parameters passed by the message information handler to the service caller can include the domain object reference and the property value. The appropriate service caller 820 to use is determined by a semantic processor 840, which utilizes a reasoner 850 to parse the service ontologies 860 to determine the appropriate service caller 820.

Validator 870 validates a received message 800 against the message protocol domain ontology 880 using the reasoner 850. With the information of the current state of the domain object, which is gathered by a service call 820, and the type of the lastly handled message, which is stored by the State Manager component 890, the actual position in the protocol is determined, and the validator 870 can check whether the current message type and the new state of the domain object are permitted.

Semantic Processor 840 is responsible for finding the appropriate service caller 820 using the received message 800 as input. In one example, the parameters "message type," "object type," and "property" are used by the semantic processor 840 to create a query to the reasoner 850 to search through the service ontologies 860 for an operation that involves those object and property types and is triggered by that message type. If such an operation is found, the Semantic Processor 840 returns the names of the service and the operation to the message information handler 810 so that the message information handler 810 can call the service caller 820. In one example, the message information handler 810 can call the service caller 820 using the name of the service using Java reflection techniques.

Reasoner 850 is a semantic reasoner able to infer logical consequences from a set of inference rules specified by means of an ontology language. Some example reasoners include PELLETTM, RACERPROTM, FACT++TM, and HERMITTM.

Any of the above described components of the system illustrated in FIG. 8 can include hardware, firmware, and/or software for performing the operations described herein. Where functionality is preformed at least in part through execution of instructions retained in software and/or firmware, those instructions will be stored (in the machine or in another component) in one or more instances of machine-readable storage media. Further, in some embodiments, any of the components can be integrated or subdivided.

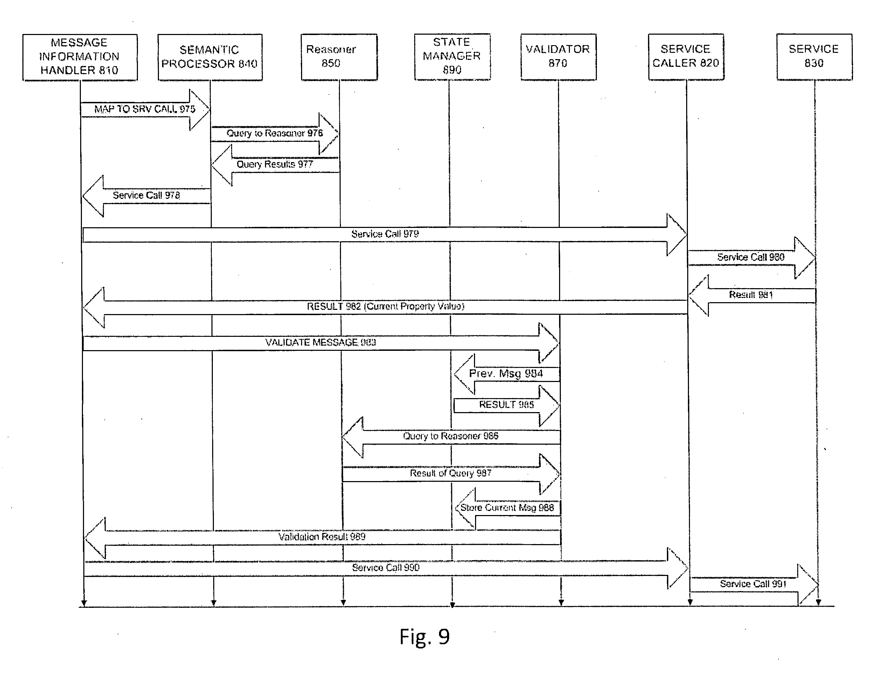

Figure 9 shows an example sequence diagram detailing the operation of the system shown in Fig. 8. Once message information handler 810 receives an incoming message, it calls the semantic processor 840 to perform the mapping to a service call at 975 to determine the current value of the desired property. Semantic processor sends a query 976 to the reasoner 850 to parse the message-to-service ontology to find the correct service callers 820 to execute. The results are then passed back to the message information handler 810 at 977 and 978.

Message information handler 810 then executes the service call 979, to read the old property value of the property specified in the property field of the incoming message. At 980, service caller 820 executes service 830 and receives the value of the property at 981. Service caller 820 then passes the current property value back to the message information handler 810 at 982.

Message information handler 810 then sends the message and the old property value to the validator 870 for validation of the message protocol. Using calls 984 and 985, validator 870 retrieves the previously sent message (if any) from the state manager 890. Once that is complete, the validator 870 generates a query to the reasoner 850 to retrieve the state transitions for this property in block 986. The results, returned in block 987, are then used by the validator 870 to validate the state transition. If the message is successfully validated, the validator 870 uses call 988 to store the current message to the state manager 890.

The validator 870 sends a validation result 989 to the message information hander 810. If the result indicates that the message was successfully validated, the message information handler 810 calls the service caller 820 at block 990 to update the property of the business domain object to the new requested property. Service caller 820 then executes the service call 991 with service 830.

While the sequence diagram of Fig. 9 and the system diagram of Fig. 8 shows discrete components, each of the components can be implemented in combination with one or more of the other components. Additionally, it is not necessary for all components to be on the same computer system, and indeed, the various components and functionality could be spread out among various computer systems in communication over a network. While Fig. 9 shows messages being passed between the various components, any form of communication is possible. This includes inter-process communications, network communications, shared memory communications, function calls, or any other method of passing information between processes or applications, within a process, or between networks.

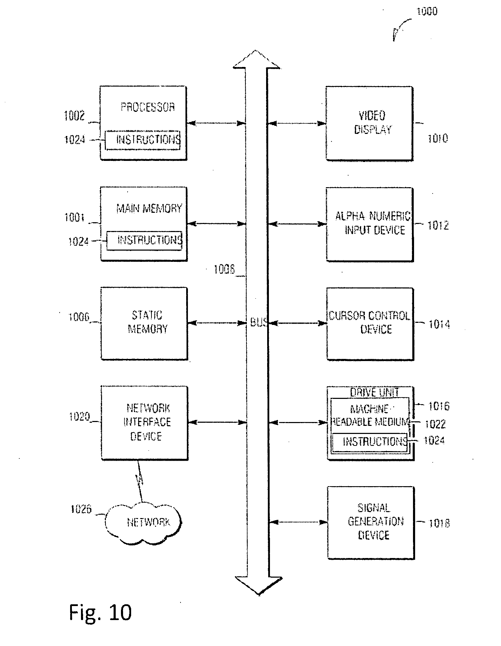

Either or both of the executing or coordinating organization can be implemented using a machine. Fig. 10 shows a diagrammatic representation of such a machine in the example form of a computer system 1000 within which a set of instructions for causing the machine to perform any one or more of the methods, processes, operations, or methodologies discussed herein may be executed. In alternative examples, the machine operates as a standalone device or may be connected (e.g., networked) to other machines. In a networked deployment, the machine may operate in the capacity of a server or a client machine in server-client network environment, or as a peer machine in a peer-to-peer (or distributed) network environment. The machine may be a Personal Computer (PC), a tablet PC, a Set-Top Box (STB), a Personal Digital Assistant (PDA), a cellular telephone, a Web appliance, a network router, switch or bridge, or any machine capable of executing a set of instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein. Examples can also be practiced in distributed system environments where local and remote computer systems which that are linked (e.g., either by hardwired, wireless, or a combination of hardwired and wireless connections) through a network, both perform tasks. In a distributed system environment, program modules may be located in both local and remote memory-storage devices (see below).

The example computer system 1000 includes a processor 1002 (e.g., a Central Processing Unit (CPU), a Graphics Processing Unit (GPU) or both), a main memory 1001 and a static memory 1006, which communicate with each other via a bus 1008. The computer system 1000 may further include a video display unit 1010 (e.g., a Liquid Crystal Display (LCD) or a Cathode Ray Tube (CRT)). The computer system 1000 also includes an alphanumeric input device 1012 (e.g., a keyboard), a User Interface (UI) cursor controller 1014 (e.g., a mouse), a disk drive unit 1016, a signal generation device 1018 (e.g., a speaker) and a network interface device 1020 (e.g., a transmitter).

The disk drive unit 1016 includes a machine-readable medium 1022 on which is stored one or more sets of instructions 1024 and data structures (e.g., software) embodying or used by any one or more of the methodologies or functions illustrated herein. The software may also reside, completely or at least partially, within the main memory 1001 and/or within the processor 1002 during execution thereof by the computer system 1000, the main memory 1001 and the processor 1002 also constituting machine-readable media.

The instructions 1024 may further be transmitted or received over a network 1026 via the network interface device 1020 using any one of a number of well-known transfer protocols (e.g., HTTP, Session Initiation Protocol (SIP)).

The term "machine-readable medium" should be taken to include a single medium or multiple media (e.g., a centralized or distributed database, and/or associated caches and servers) that store the one or more sets of instructions. The term "machine-readable medium" shall also be taken to include any medium that is capable of storing, encoding, or carrying a set of instructions for execution by the machine and that cause the machine to perform any of the one or more of the methodologies illustrated herein. The term "machine-readable medium" shall accordingly be taken to include, but not be limited to, solid-state memories, and optical and magnetic medium. In one example, machine-readable medium can include a non-transitory machine readable medium.

Method examples illustrated herein may be computer-implemented. Some examples may include computer-readable media encoded with a computer program (e.g., software), which includes instructions operable to cause an electronic device to perform methods of various examples. A software implementation (or computer-implemented method) may include microcode, assembly language code, or a higher-level language code, which further may include computer readable instructions for performing various methods. The code may form portions of computer program products. Further, the code may be tangibly stored on one or more volatile or non-volatile computer-readable media during execution or at other times. These computer-readable media may include, but are not limited to, hard disks, removable magnetic disks, removable optical disks (e.g., compact disks and digital video disks), magnetic cassettes, memory cards or sticks, Random Access Memories (RAMs), Read Only Memories (ROMs), and the like.

## Claims

1. A method of business-to-business messaging comprising:
using a computer processor programmed to perform the operations including:
receiving a human-cognizable business-to-business message;
parsing the human-cognizable business-to-business message;
validating the human-cognizable business-to-business message using a message protocol ontology; and
selecting and executing a service call corresponding to the particular human-cognizable business-to-business message based upon a message-to-service ontology.

2. The method of claim 1, further comprising: storing a plurality of domain objects that comprise a state field that is representative of a status of the domain object.

3. The method of any one of the preceding claims, wherein receiving a human-cognizable business-to-business message comprises receiving a human-cognizable business-to-business message that is a request to change the state of one of the plurality of domain objects and wherein the
message includes an identifier that identifies one of the stored plurality of domain objects, and preferably further comprising:
validating a second human-cognizable business-to-business message using the message protocol ontology; the second human-cognizable business-to-business message being a request to change the state of a different one of the plurality of domain objects than the identified domain object.

4. The method of claim 3, further comprising:
validating a second human-cognizable business-to-business message using a second message protocol ontology; the second human-cognizable business-to-business message being a request to change the state of a different one of the plurality of domain objects than the identified domain object.

5. The method of any one of the preceding claims, wherein validating the human- cognizable business-to-business message using the message protocol ontology comprises ascertaining whether the received human-cognizable business-to-business message is a valid message based on the state of the identified domain object by using the message protocol ontology.

6. The method of claim 5, wherein validating the human-cognizable business-to-business message using the message protocol ontology further comprises also using the message protocol ontology to determine whether the current state of the identified domain object can be changed to a desired state included in the human-cognizable business-to-business message.

7. The method of any one of the preceding claims, wherein the human-cognizable business-tobusiness message relates to one or more domain objects which include a state, and the message protocol ontology defines allowed states and state transitions of the domain objects; and wherein validating the human- cognizable business-to-business message using the message protocol ontology comprises using the message protocol ontology to ascertain whether the received human-cognizable business-to-business message is a valid message based on the state of the one or more domain objects and based upon a desired state transition derived from the human-cognizable business-tobusiness message.

8. A business-to-business messaging system comprising:
a user terminal configured to send a human-cognizable business-to-business message through a communications network to a central terminal based upon a message protocol ontology;
the central terminal comprising a computer processor which is configured to validate the human-cognizable business-to-business message based upon the message protocol ontology and using a message-to-service ontology, execute a service call corresponding to the human-cognizable business-to-business message.

9. The system of claim 8, wherein the central terminal further comprises a database for storing a plurality of domain objects that comprise a state field that is representative of a status of the domain object, and/or wherein the message protocol ontology comprises allowed state transitions.

10. The system of claim 8 or 9, wherein the human-cognizable business-to-business message comprises a request to change the state of one of the plurality of domain objects and an identifier to identify the domain object, wherein the central terminal preferably is configured to update the state of the domain object identified in the human-cognizable business-to-business message only if the state transition is allowed based upon the message protocol ontology.

11. The system of any one of the preceding claim 8 to 10, wherein the human-cognizable business-tobusiness message relates to one or more domain objects which include a state field, and the message protocol ontology defines allowed states and state transitions of the domain objects; and wherein the computer processor is configured to validate the human-cognizable business-to-business message using the message protocol ontology to ascertain whether the received human-cognizable business-to-business message is a valid message based on the state of the one or more domain objects and based upon a desired state included in the human-cognizable business-to-business message, and wherein the computer processor preferably is configured to validate a second human-cognizable business-tobusiness message based upon a second message protocol ontology.

12. A machine readable medium that stores instructions which when performed by a machine, causes the machine to perform operations comprising:
receiving a human-cognizable business-to-business message;
obtaining a current state of a domain object stored in non-transitory storage, wherein the domain object is identified in the human-cognizable business-to-business message;
validating the received human-cognizable business-to-business message based upon a new desired state provided in the human-cognizable business-to-business message, a current state, and a message protocol ontology;
updating the current state of the domain object to the new desired state if the human-cognizable business-to-business message is successfully validated by executing a service call which is selected based upon a message- to-service call ontology.

13. The machine readable medium of claim 12, wherein the instructions, when performed by a machine, cause the machine to perform operations further comprising:
sending an outgoing human-cognizable business-to-business message.

14. The machine readable medium of claim 12 or 13,
wherein the instructions, cause the machine to perform operations further comprising:
filling in a message type field in the outgoing human-cognizable business-to-business message with one of: request a state change, order a state change, confirm a state change, inform about a state change, deny a state change, inform about a new business object, request information, or deliver information; and/or
filling in an object reference field in the outgoing human-cognizable business-to-business message with the reference to the actual domain object that is a subject of the business-to-business message.

15. The machine readable medium of any one of the preceding claims 12 to 14, comprising additional instructions for validating the business-to-business message comprising:
parsing the message protocol ontology to verify that the new desired state is a possible state transition from the current state for the domain object; and/or
using the message type, object type and property of the received human-cognizable business-to-business message and the message-to-service call ontology to select a service call from the message-to-service call ontology.
